# EUROPÄISCHE PATENTSCHRIFT

(11) **EP 2 172 134 B1**
(45) Veröffentlichungstag und Bekanntmachung des Hinweises auf die Patenterteilung: **26.01.2011**
(21) Anmeldenummer: 09012449.6
(22) Anmeldetag: 01.10.2009
(51) Int. Cl.: A47C 7/54, B60N 2/46

(54) **Armlehne**
Armrest
Accoudoir

(30) Priorität: 01.10.2008 DE 102008050501
(43) Veröffentlichungstag der Anmeldung: 07.04.2010
(73) Patentinhaber: GRAMMER Automotive GmbH, 92224 Amberg (DE)
(72) Erfinder: Beidenbach, Edmund, 40764 Langenfeld (DE)
(74) Vertreter: Ostriga, Sonnet, Wirths & Roche

(56) Entgegenhaltungen:
- DE-A1- 3 214 877
- FR-A1- 2 784 878
- US-A- 2 204 205
- US-A- 5 352 012

## Beschreibung

Die Erfindung betrifft eine Armlehne, wie Mittelarmlehne für Fahrzeuge, entsprechend dem Oberbegriff des Anspruchs 1. Eine solche Armlehne, insbesondere eine Armlehne für Omnibusse, ist in der US 2 204 205 beschrieben (s. dort insbesondere Fig. 4 und 5).

Der umpolsterte Armlehnenkörper der bekannten Armlehne ist zwischen einer angehobenen und einer abgesenkten Position schwenkbar. Die abgesenkte Position bildet die Ruheposition, in welcher der Fahrgast seinen Unterarm auf der Deckfläche des Armlehnenkörpers abstützen kann. Dabei stützt sich ein benachbart der Schwenkachse des Armlehnenkörpers nach unten ragender Vorsprung oben auf der Stirnfläche eines nach oben ragenden Kolbens einer druckfederbelasteten Kolbenzylindereinheit ab. Die Rückstellkraft der Druckfeder ist so bemessen, dass bei normaler Benutzungslage des sich in der Ruheposition befindlichen Armlehnenkörpers keine Veränderung der Neigung des Armlehnenkörpers ergibt. Sobald indessen der Armlehnenkörper in seiner Ruheposition mit einer Überlast, beispielsweise durch eine aufsitzende Person, beansprucht wird, wird die Rückstellkraft der federbelasteten Kolbenzylindereinheit überwunden. Die Armlehne kann auf diese Weise einen zusätzlichen Abwärtsschwenk vollführen und wird so vor einer Beschädigung bewahrt (vgl. US 2 204 205 Seite 1 rechte Spalte, Zeile 47 bis Seite 2 linke Spalte, Zeile 7).

Trotz der mit der bekannten Armlehne verbundenen Vorteile, insbesondere auch, was deren Überlastsicherung betrifft, wird die bekannte Armlehne wegen ihrer aufwendigen Guss-Sonderbauteile (vgl. US 2 204 205 Fig. 5 und 6) als nachteilig empfunden.

Ausgehend von einer Armlehne, wie Mittelarmlehne von Fahrzeugen, gemäß der US 2 204 205, liegt der Erfindung die Aufgabe zugrunde, eine gleichermaßen mit einer vorteilhaften Überlastsicherung versehene Armlehne zu schaffen, welche im Vergleich zum Bekannten eine relativ einfache Bauform aufweist.

Diese Aufgabe wird gemeinsam mit den Merkmalen des Oberbegriffs des Anspruchs 1 und dessen kennzeichnenden Merkmalen dadurch gelöst, dass der Armlehnenkörper mittels eines mit ihm bewegungseinheitlichen Halteelements einen sich parallel zur Schwenkachse des Armlehnenkörpers erstreckenden Biegestab mitschwenkbar führt, dessen beide freie Biegestabenden sich in der Ruheposition des Armlehnenkörpers entsprechend dessen Abwärtsschwenkrichtung jeweils gegen einen seitens der Sitzstruktur gebildeten Stützanschlag abstützen.

Ein wesentliches erfindungsgemäßes Element besteht aus einem sich parallel zur Schwenkachse des Armlehnenkörpers erstreckenden Biegestab, der im Zuge der Neigeverstellung des Armlehnenkörpers mit diesem mitgeschwenkt wird, und zwar mittels eines mit dem Armlehnenkörper bewegungseinheitlichen Halteelements. Wenn der Armlehnenkörper abwärts geschwenkt wird, stützen sich beide freie Biegestabenden entsprechend der Abwärtsschwenkrichtung des Armlehnenkörpers jeweils gegen einen seitens der Sitzstruktur gebildeten Stützanschlag ab. Dabei ist der Biegewiderstand des Biegestabes so bemessen, d.h. so groß, dass der Armlehnenkörper bei einer Normalbelastung (von beispielsweise 30 daN) durch einen sich oben auf dem Armlehnenkörper aufstützenden Fahrgastarm seine Neigelage nicht verändert. Erst wenn auf den Armlehnenkörper eine Überlast in dessen Abwärtsschwenkrichtung einwirkt, gibt der Biegestab, welcher sich mit seinen beiden Biegestabenden jeweils auf einem seitens der Sitzstruktur gebildeten Stützanschlag abstützt, federelastisch nach und bewahrt dadurch die Armlehnenstruktur vor einer Beschädigung. Gattungsgemäße Armlehnen sind derzeit so ausgelegt, dass sie eine Belastung von mindestens 80 daN beschädigungsfrei ertragen.

In weiterer Ausgestaltung der Erfindung ist der Stützanschlag mit der Sitzstruktur fest, insbesondere unnachgiebig fest.

Eine zweckmäßige Ausführungsform besteht darin, dass das Halteelement an einem die Schwenkachse bildenden Schwenkachskörper befestigt ist.

Dabei bildet das Halteelement einen vom Schwenkachskörper radial vorragenden Fortsatz. Eine symmetrische Belastung wird dadurch erzielt, dass das Halteelement den Biegestab auf halber Länge, d.h. mittig, angreift.

Zur Aufnahme des Biegestabes weist das Halteelement erfindungsgemäß eine Halteaussparung auf.

Entsprechend einer bevorzugten Ausführungsform greift das Halteelement entsprechend der Abwärtsschwenkrichtung des Armlehnenkörpers den Biegestab mit einer Haltefläche seiner Halteaussparung nur druckfest an. Dies bedeutet, dass der Biegestab nur lose an der Haltefläche des Halteelements anliegt und der Biegestab so mit seinen Biegestabenden während der Abwärtsschwenkrichtung des Armlehnenkörpers mittels des Halteelements gegen die die Ruheposition bestimmenden Stützanschläge angelegt wird. Bei einer Schwenkung des Armlehnenkörpers in dessen angehobene Position sorgen sodann z.B. mit dem Armlehnenkörper schwenkbare Haltemittel dafür, den Biegestab in die angehobene Position des Armlehnenkörpers, beispielsweise mittels druckfester Kopplung, mitzunehmen.

Andererseits sieht die Erfindung auch eine Ausführungsform vor, wonach das Halteelement bezüglich beider Schwenkrichtungen des Armlehnenkörpers den Biegestab zug- und druckfest angreift. Dies kann beispielsweise dadurch verwirklicht werden, dass der Biegestab an dem Halteelement formschlüssig befestigt ist, z.B. mittels einer Halteschelle.

Eine weitere erfindungsgemäße Besonderheit besteht darin, dass jeder Stützanschlag entweder von der Sitzstruktur selbst oder von einer an der Sitzstruktur befestigten Haltekonsole gebildet ist.

Eine vorteilhafte Ausführungsform entsprechend der Erfindung besteht darin, dass jedes Biegestabende in einer koaxial zur Schwenkachse angeordneten teilkreisförmigen Führungsaussparung geführt ist, deren einer Endbereich den Stützanschlag für das Biegestabende bezüglich der Ruheposition des Armlehnenkörpers bildet, während der andere Endbereich der Führungsaussparung einen Anschlag für das Biegestabende bezüglich der angehobenen Position des Armlehnenkörpers darstellt. Diese erfindungsgemäße Ausführungsform ist insbesondere dann zweckmäßig, wenn der Biegestab auf dem Schwenkweg des Armlehnenkörpers in die Ruheposition nur druckfest an der Haltefläche des Halteelements anliegt. Bei dem Weg des Armlehnenkörpers von seiner Ruheposition in dessen angehobene Position entfällt die Unterstützung des Biegestabes durch das Halteelement, so dass der Biegestab durch die Schwerkraft nach unten bewegt wird, während dessen beide Biegestabenden in den zugehörigen teilkreisförmigen Führungsaussparungen geführt sind.

Jede teilkreisförmige Führungsaussparung bildet zweckmäßig eine Durchgangsaussparung, welche von dem zugehörigen Biegestabende quer durchsetzt ist.

Eine bauliche Vereinfachung ist dadurch gegeben, dass jede teilkreisförmige Führungsaussparung in einem Bereich der Haltekonsole angeordnet ist, welcher auch eine Lageraussparung oder ein Lagerloch für jeweils einen Lagerzapfen des Schwenkachskörpers bildet.

Entsprechend einer weiteren Ausführungsform ist der Armlehnenkörper derart ausgebildet, dass dieser zwei im Abstand voneinander angeordnete Längsrahmenteile aufweist, welche mittels des sich orthogonal zu den beiden Längsrahmenteilen erstreckenden Schwenkachskörpers distanziert und aneinander befestigt sind.

Weiterhin ist an dem sowohl vom Schwenkachskörper als auch vom Biegestab entfernten freien Ende des Armlehnenkörpers ein Querrahmenteil angeordnet, welches die beiden Längsrahmenteile voneinander distanziert und aneinander befestigt.

Eine bevorzugte erfindungsgemäße Ausführungsform besteht darin, dass die Schwenkachse zwischen dem freien Ende des Armlehnenkörpers und dem Biegestab angeordnet ist. Der Armlehnenkörper bildet demnach einen zweiarmigen Hebel, wobei in zweckmäßiger Ausgestaltung dessen längerer Teil zwischen dem freien Ende des Armlehnenkörpers und der Schwenkachse und dessen kürzerer Teil zwischen der Schwenkachse und dem Biegestab angeordnet ist. Dieser Sachverhalt ist erfindungsgemäß dadurch gekennzeichnet, dass die Schwenkachse dem Biegestab näher benachbart ist als dem freien Ende des Armlehnenkörpers.

Im Zusammenhang mit der letztgenannten Ausführungsform, bei welcher der Armlehnenkörper einen zweiarmigen Hebel bildet, ragt das Halteelement vom Schwenkachskörper weg zum Biegestab hin. Insbesondere ragt das Halteelement bezüglich der Schwenkachse radial vor.

Wie bereits weiter oben erwähnt, stützen sich beide freie Biegestabenden in der Ruheposition des Armlehnenkörpers entsprechend dessen Abwärtsschwenkrichtung jeweils gegen einen seitens der Sitzstruktur gebildeten Stützanschlag ab. Sobald eine Überlast von größer als z.B. 30 daN auf den Armlehnenkörper einwirkt, leitet das Halteelement diese Überlast in den Biegestab ein, dessen beide Biegestabenden an den seitens der Sitzstruktur gebildeten Stützanschlägen festgelegt sind. Hierbei wird der Armlehnenkörper an seinem freien Ende um einen gewissen Betrag, d.h. mit einem zusätzlichen Abwärtsschwenk, nach unten bewegt. Erfindungsgemäß wird diese zusätzliche Abwärtsschwenkbewegung in einer besonderen erfindungsgemäßen Ausführungsform dadurch berücksichtigt, dass jedes Biegestabende eine Federausgleichsaussparung durchsetzt, welche auf einem vom freien Ende des Armlehnenkörpers wegweisenden Bereich je eines Längsrahmenteils angeordnet ist und welche dem Biegestabende eine Relativbewegung bezüglich des Längsrahmenteils gestattet.

Um der überlastbedingten Abwärtsschwenkbewegung eine Grenze zu setzen, sieht die Erfindung weiterhin vor, dass jede Federausgleichsaussparung einen Begrenzungsanschlag für den bei Überlast auftretenden zusätzlichen Abwärtsschwenk des Armlehnenkörpers bildet.

Die Federausgleichsaussparung erstreckt sich zweckmäßig teilkreisförmig und ist koaxial zur Schwenkachse des Armlehnenkörpers angeordnet.

Insbesondere für jene Ausführungsform, bei welcher das Halteelement den Biegestab mit seiner Haltefläche seiner Halteaussparung nur druckfest angreift, hat es sich als vorteilhaft erwiesen, dass jedes Biegestabende außenseitig des zugehörigen Längsrahmenteils ein Sicherungselement gegen Axialverschiebung des Biegestabes trägt. Dieses Sicherungselement ist zweckmäßig ein Seeger-Sicherungsring, welcher in einer Außennut des jeweiligen Biegestabendes gehalten ist.

In den Zeichnungen ist ein bevorzugtes Ausführungsbeispiel der Erfindung dargestellt, hierbei zeigt
Fig. 1 eine Draufsicht auf das Traggerüst, welches von der gestrichelt dargestellten Kontur eines Armlehnenkörpers umgeben ist,

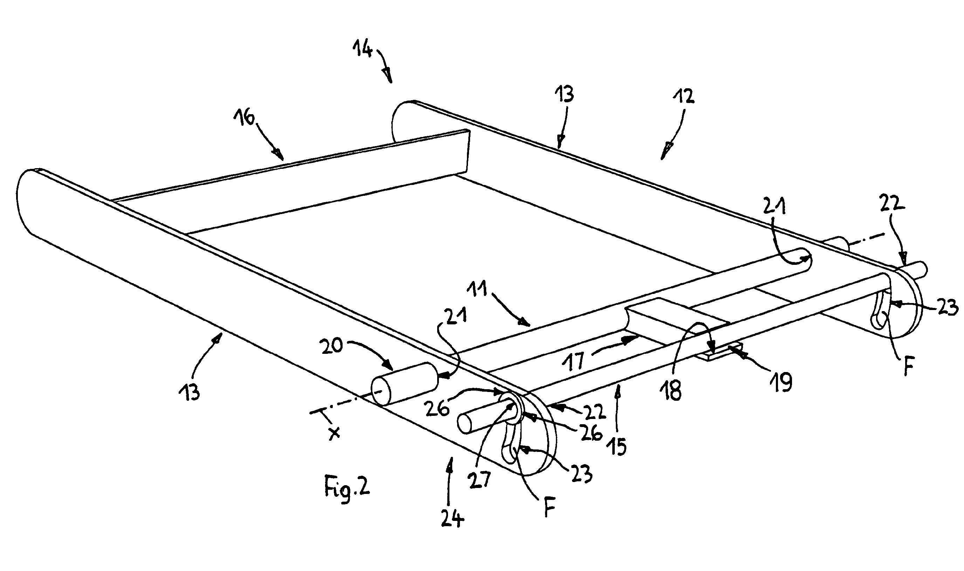

Fig. 2 das Traggerüst, von oben betrachtet, in perspektivischer Darstellung,
Fig. 3 eine perspektivische Teildarstellung des Traggerüstes, welches in zwei sitz- oder fahrzeugfesten Haltekonsolen gelagert und geführt ist, und zwar entsprechend der angehobenen Position eines das Traggerüst enthaltenden Armlehnenkörpers,
Fig. 4 in Anlehnung an die Darstellung gemäß Fig. 3 das Traggerüst in abgesenkter Position, der Ruheposition, des Armlehnenkörpers und

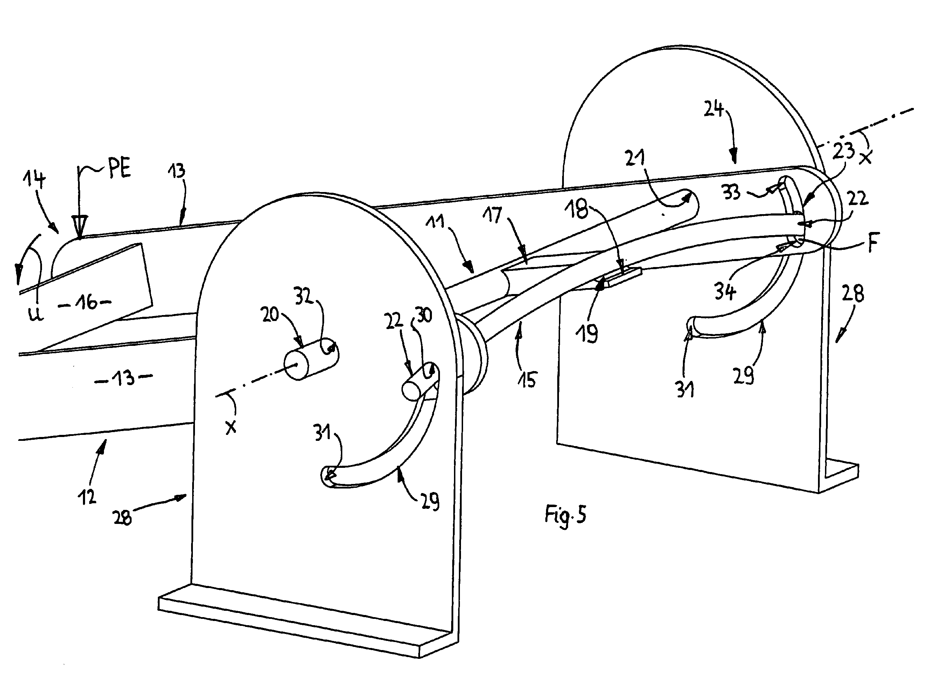

Fig. 5 in Anlehnung an die Darstellung gemäß Fig. 4 das Traggerüst während einer auf den Armlehnenkörper einwirkenden Überlast.

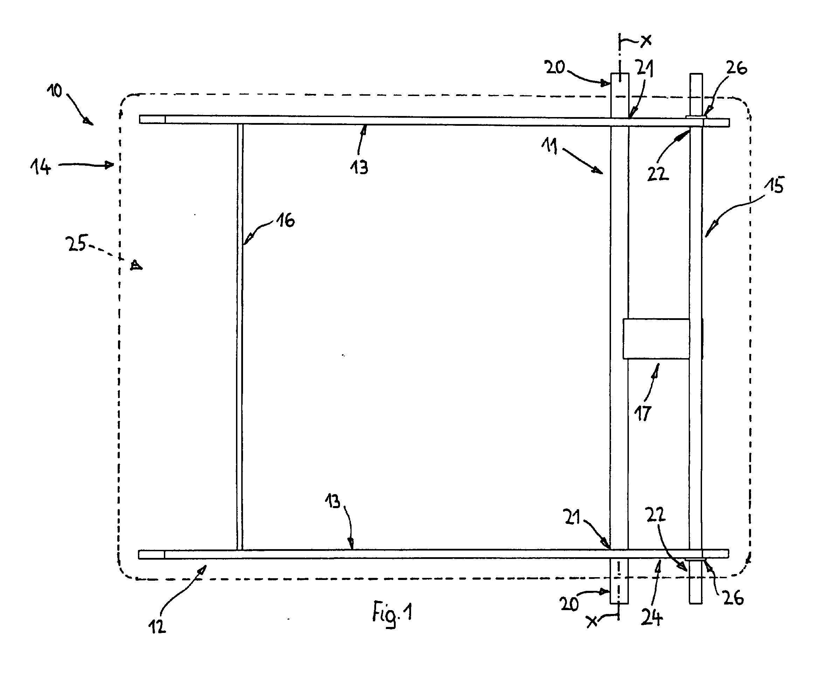

Von dem in Fig. 1 nur mit einer gestrichelten Kontur angedeuteten Armlehnenkörper 10 ist - gewissermaßen stellvertretend - nur dessen Traggerüst 12 detailliert gezeichnet. Zur Komplettierung des Armlehnenkörpers 10 muss man sich noch eine das Traggerüst 12 umgebende Polsterung 25 vorstellen.

Der Armlehnenkörper 10 weist zwei im Abstand voneinander angeordnete Längsrahmenteile 13 auf, welche mittels eines sich orthogonal zu den beiden Längsrahmenteilen 13 erstreckenden Schwenkachskörpers 11 distanziert und aneinander befestigt sind. Der Schwenkachskörper 11 ist zwischen dem freien Ende 14 des Armlehnenkörpers 10 und einem Biegestab 15 angeordnet. Dabei ist der Schwenkachskörper 11 dem Biegestab 15 näher benachbart als dem freien Ende 14 des Armlehnenkörpers 10.

An dem sowohl vom Schwenkachskörper 11 als auch von einem Biegestab 15 entfernten freien Ende 14 des Armlehnenkörpers 10 ist ein Querrahmenteil 16 des Traggerüsts 12 angeordnet, welches die beiden Längsrahmenteile 13 voneinander distanziert und aneinander befestigt.

Am Schwenkachskörper 11 ist ein Halteelement 17 befestigt, welches einen Fortsatz darstellt, der vom Schwenkachskörper 11 zum Biegestab 15 radial hinragt und letzteren mittels einer Haltefläche 18 einer Halteaussparung 19 nur druckfest untergreift.

Der Schwenkachskörper 11 durchsetzt die beiden Längsrahmenteile 13 mit Lagerzapfen 20 in Durchstecklöchern 21, in welchen die Lagerzapfen 20 in nicht näher dargestellter Weise drehfest verschweißt sind. Auch das Querrahmenteil 16 ist mittels nicht näher gezeigter Schweißverbindungen mit den beiden Längsrahmenteilen 13 verbunden. Das Halteteil 17 ist ebenfalls mittels einer nicht näher dargestellten Schweißverbindung mit der Außenfläche des Schwenkachskörpers 11 verbunden.

Der Biegestab 15 weist zwei Biegestabenden 22 auf, von denen jedes eine Federausgleichsaussparung 23 durchsetzt. Jede Federausgleichsaussparung 23 ist auf einem vom freien Ende 14 des Armlehnenkörpers 10 wegweisenden Bereich 24 je eines Längsrahmenteils 13 angeordnet. Die Federausgleichsaussparungen 23 gestatten den Biegestabenden 22 jeweils eine Relativbewegung bezüglich des zugeordneten Längsrahmenteils 13.

Jede Federausgleichsaussparung 23 erstreckt sich teilkreisförmig und ist koaxial zur Schwenkachse x des Armlehnenkörpers 10 angeordnet.

Jedes Biegestabende 22 trägt jeweils außenseitig des zugehörigen Längsrahmenteils 13 ein Sicherungselement gegen Axialverschiebung des Biegestabes 15 und zwar einen Seeger-Sicherungsring 26 in einer Außenringnut 27.

Das Halteelement 17, welches zur Aufnahme des Biegestabes die Halteaussparung 19 mit der Haltefläche 18 bildet, greift den Biegestab 15 auf halber Länge, d.h. mittig an, so dass eine symmetrische Lastverteilung gewährleistet ist. Wie bereits erwähnt, greift das Halteelement 17 entsprechend der mit u bezeichneten Abwärtsschwenkrichtung des freien Endes 14 des Armlehnenkörpers 10 den Biegestab 15 mit der Haltefläche 18 der Halteraussparung nur druckfest an, und zwar untergreift die Haltefläche 18 den Biegestab 15. In nicht dargestellter Weise ist es ebenfalls möglich, dass das Halteelement 17 bezüglich beider Schwenkrichtungen u und v des Armlehnenkörpers 10 den Biegestab 15 sowohl zug- als auch druckfest angreift. Die letztgenannte Ausführungsform kann beispielsweise dadurch gebildet sein, dass der mittlere Bereich des Biegestabes 15 in der Halteaussparung 19 des Halteteils 17 mittels einer Halteschelle befestigt ist.

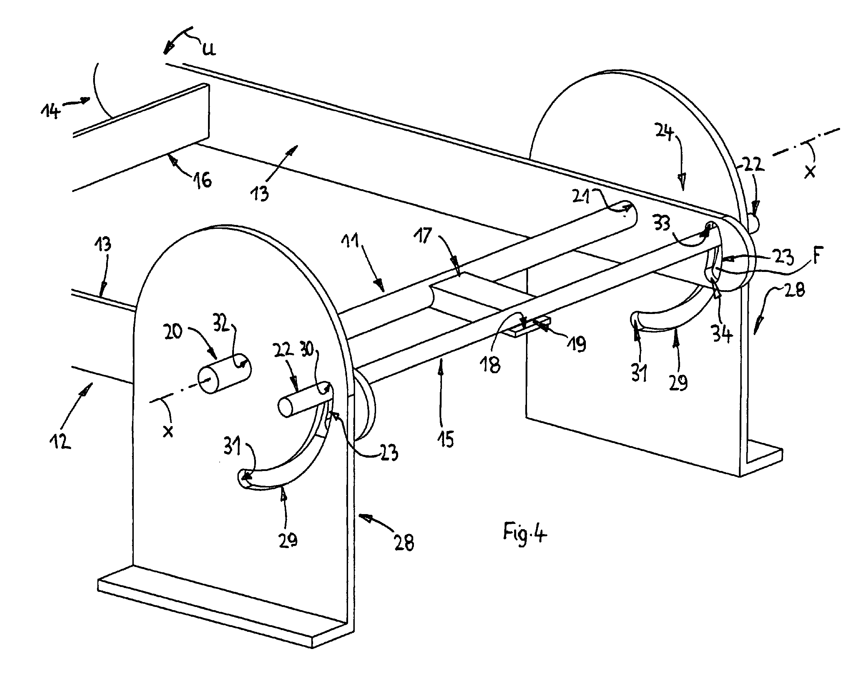

In Fig. 4 ist die Ruheposition des das Traggerüst 12 enthaltenden Armlehnenkörpers 10 dargestellt. Haltekonsolen 28, welche fahrzeugfest oder sitzfest angeordnet oder von der Sitzstruktur selbst gebildet sein können, weisen für jedes Biegestabende 22 eine Führungsaussparung 29 auf. Die Führungsaussparung 29 stellt eine Durchgangsaussparung dar, welche jeweils von dem zugehörigen freien Biegestabende 22 quer durchsetzt ist. Jede teilkreisförmige Führungsaussparung 29 ist koaxial zur Schwenkachse x angeordnet und mit einem Endbereich versehen, welcher einen Stützanschlag 30 für das Biegestabende 22 bezüglich der in Fig. 4 dargestellten Ruheposition des Armlehnenkörpers 10 bzw. des Traggerüstes 12 darstellt.

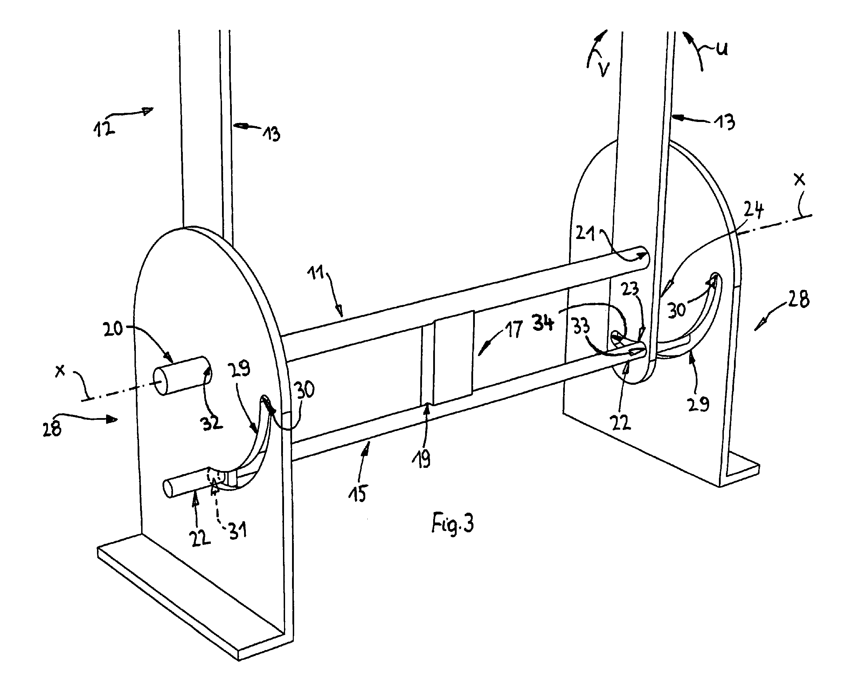

In Fig. 3 ist die angehobene Position des das Traggerüst 12 beinhaltenden Armlehnenkörpers 10 dargestellt. Gemäß Fig. 3 bildet der im Vergleich zu Fig. 4 andere Endbereich der Führungsaussparung 29 einen gestrichelt eingezeichneten Positionierungsanschlag 31, welcher die angehobene Position des Armlehnenkörpers 10 festlegt.

Jede teilkreisförmige Führungsaussparung 29 ist in einem Bereich der Haltekonsole angeordnet, welcher auch ein Lagerloch 32 für jeweils einen dort gleitgelagerten Lagerzapfen 20 des Schwenkachskörpers 11 bildet.

Das Traggerüst 12 sowie die Haltekonsole 28 bestehen zweckmäßig aus Stahl, während der Biegestab 15 - ein Rundprofilstab - zweckmäßig von einem Federmetall oder von einem Federstahl gebildet sein kann.

Die Funktion der Armlehne 10 ist folgende:
Gemäß Fig. 3 befindet sich der Armlehnenkörper 10 mit seinem Traggerüst 12 in der angehobenen Position. Dabei liegen die Lagerzapfen 20 des Schwenkachskörpers 11 an den Positionierungsanschlägen 31 der Führungsaussparungen 29 an. Die Biegestabenden 22 liegen hierbei an den Endanschlägen 33 der Federausgleichaussparungen 23 an, nachdem das Traggerüst 12 entsprechend der Aufwärtsschwenkrichtung v in seine angehobene Position geschwenkt worden war.

Sobald der Armlehnenkörper 10 von seiner angehobenen Position gemäß Fig. 3 in seine Ruheposition gemäß Fig. 4 versetzt wird, liegen die Biegestabenden 22 an den Stützanschlägen 30 der Führungsaussparungen 29 an. Der Biegestab 15 wurde zuvor beim Abwärtsschwenk entsprechend der Schwenkrichtung u von der Haltefläche 18 des Halteelements 17 untergriffen und als Teil des Traggerüsts mitgeschwenkt.

Aus Fig. 4 geht auch hervor, dass die Biegestabenden 22 etwa an den sich oben befindenden Endanschlägen 33 der Federausgleichsaussparungen 23 anliegen. Auf diese Weise bilden die Federausgleichsaussparungen 23 in der Ruheposition unterhalb der Biegestabenden 22 einen Freiraum F von noch relativ großer Umfangslänge.

Sobald eine Überlast PE auf den Armlehnenkörper 10 und dessen Traggerüst 12 einwirkt und eine Abwärtsbewegung in Abwärtsschwenkrichtung u veranlasst, drückt das Halteelement 17 mit der Haltefläche 18 seiner Halteaussparung 19 den Biegestab 15, diesen mittig auslenkend, nach oben. Hierbei stützen sich die Biegestabenden 22 nach wie vor an den Stützanschlägen 30 der Führungsaussparungen 29 ab. Zugleich erfolgt eine Relativbewegung der Federausgleichsaussparungen 23 relativ zum jeweiligen Biegestabende 22 unter Verringerung des Freiraums F. Gegen die Biegestabenden 22 würden die Begrenzungsanschläge 34 erst bei einer weiteren Vergrößerung der Überlast PE stoßen.

## Patentansprüche

1. Armlehne, wie Mittelarmlehne für Fahrzeuge, mit einem um eine Schwenkachse (x), die seitens einer Sitzstruktur (28) gelagert ist, zwischen einer angehobenen und einer abgesenkten Position schwenkbaren Armlehnenkörper (10), in dessen abgesenkter Position, der Ruheposition, sich der Armlehnenkörper (10) entsprechend seiner Abwärtsschwenkrichtung (u) mindestens mittelbar an mindestens einem Stützanschlag (30) entgegen einer Federrückstellkraft abstützt, derart, dass dem Armlehnenkörper (10) bei einer in der Ruheposition auftretenden Überlast ein zusätzlicher Abwärtsschwenk entgegen der Federrückstellkraft gestattet ist, **dadurch gekennzeichnet, dass** der Armlehnenkörper (10) mittels eines mit ihm bewegungseinheitlichen Halteelements (17) einen sich parallel zur Schwenkachse (x) des Armlehnenkörpers (10) erstreckenden Biegestab (15) mitschwenkbar führt, dessen beide freie Biegestabenden (22) sich in der Ruheposition des Armlehnenkörpers (10) entsprechend dessen Abwärtsschwenkrichtung (u) jeweils gegen einen seitens der Sitzstruktur (28) gebildeten Stützanschlag (30) abstützen.

2. Armlehne nach Anspruch 1, **dadurch gekennzeichnet, dass** der Stützanschlag (30) mit der Sitzstruktur fest ist.

3. Armlehne nach Anspruch 1 oder nach Anspruch 2, **dadurch gekennzeichnet, dass** das Halteelement (17) an einem die Schwenkachse (x) bildenden Schwenkachskörper (11) befestigt ist.

4. Armlehne nach einem der Ansprüche 1 bis 3, **dadurch gekennzeichnet, dass** das Halteelement (17) einen vom Schwenkachskörper (11) radial vorragenden Fortsatz bildet.

5. Armlehne nach einem der Ansprüche 1 bis 4, **dadurch gekennzeichnet, dass** das Halteelement (17) den Biegestab (15) auf halber Länge, d.h. mittig, angreift.

6. Armlehne nach einem der Ansprüche 1 bis 5, **dadurch gekennzeichnet, dass** das Halteelement (17) entsprechend der Abwärtsschwenkrichtung (u) des Armlehnenkörpers (10) den Biegestab (15) mit einer Haltefläche (18) seiner Halteaussparung (19) nur druckfest angreift.

7. Armlehne nach einem der Ansprüche 1 bis 5, **dadurch gekennzeichnet, dass** das Halteelement (17) bezüglich beider Schwenkrichtungen (u, v) des Armlehnenköpers (10) den Biegestab (15) zug- und druckfest angreift.

8. Armlehne nach einem der Ansprüche 1 bis 7, **dadurch gekennzeichnet, dass** jedes Biegestabende (22) in einer koaxial zur Schwenkachse (x) angeordneten teilkreisförmigen Führungsaussparung (29) geführt ist, deren einer Endbereich den Stützanschlag (30) für das Biegestabende (22) bezüglich der Ruheposition des Armlehnenkörpers (10) bildet, während deren anderer Endbereich einen Anschlag (31) für das Biegestabende (22) bezüglich der angehobenen Position des Armlehnenkörpers (10) darstellt.

9. Armlehne nach Anspruch 8, **dadurch gekennzeichnet, dass** jede teilkreisförmige Führungsaussparung (29) in einem Bereich der Haltekonsole (28) angeordnet ist, welcher auch eine Lageraussparung oder ein Lagerloch (32) für jeweils einen Lagerzapfen (20) des Schwenkachskörpers (11) bildet.

10. Armlehne nach einem der Ansprüche 1 bis 9, **dadurch gekennzeichnet, dass** der Armlehnenkörper (10) zwei im Abstand voneinander angeordnete Längsrahmenteile (13) aufweist, welche mittels des sich orthogonal zu den beiden Längsrahmenteilen(13) erstreckenden Schwenkachskörpers (11) distanziert und aneinander befestigt sind.

11. Armlehne nach einem der Ansprüche 1 bis 10, **dadurch gekennzeichnet, dass** die Schwenkachse (x) zwischen einem freien Ende (14) des Armlehnenkörpers (10) und dem Biegestab (15) angeordnet ist.

12. Armlehne nach Anspruch 11, **dadurch gekennzeichnet, dass** die Schwenkachse (x) dem Biegestab (15) näher benachbart ist als dem freien Ende (14) des Armlehnenkörpers (10).

13. Armlehne nach einem der vorangehenden Ansprüche, **dadurch gekennzeichnet, dass** das Halteelement (17) vom Schwenkachskörper (11) weg zum Biegestab (15) hinragt.

14. Armlehne nach einem der vorangehenden Ansprüche, **dadurch gekennzeichnet, dass** jedes Biegestabende (22) eine Federausgleichsaussparung (23) durchsetzt, welche auf einem vom freien Ende des Armlehnenkörpers (10) wegweisenden Bereich (24) je eines Längsrahmenteils (13) angeordnet ist und welche dem Biegestabende (22) eine Relativbewegung bezüglich des Längsrahmenteils (13) gestattet.

15. Armlehne nach Anspruch 14, **dadurch gekennzeichnet, dass** jede Federausgleichsaussparung (23) einen Begrenzungsanschlag (34) für den bei Überlast (PE) auftretenden zusätzlichen Abwärtsschwenk des Armlehnenkörpers (10) bildet.

## Claims

1. Armrest, such as a central armrest for vehicles, having an armrest body (10) which can be pivoted, about an axis of pivoting (x) mounted by a seat structure (28), between a raised and a lowered position, and in the lowered position, the inoperative position, of which said armrest body (10) is supported, in a manner corresponding to its direction of downward pivoting (u), at least indirectly on at least one supporting stop (30) against a spring restoring force in such a way that said armrest body (10) is permitted, in the event of an overload occurring in the inoperative position, an additional downward swing against the spring restoring force,
**characterised in that**
the armrest body (10) guides a bending bar (15), which extends parallel to the axis of pivoting (x) of said armrest body (10), in a co-pivotable manner by means of a holding element (17) which is uniform in movement with said armrest body, the two free ends (22) of which bending bar are each supported, when the armrest body (10) is in the inoperative position, against a supporting stop (30) formed by the seat structure (28), in a manner corresponding to the direction of downward pivoting (u) of said armrest body.

2. Armrest according to claim 1,
**characterised in that**
the supporting stop (30) is integral with the seat structure.

3. Armrest according to claim 1 or according to claim 2,
**characterised in that**
the holding element (17) is fastened to a pivoting-axis member (11) forming the axis of pivoting (x).

4. Armrest according to one of claims 1 to 3,
**characterised in that**
the holding element (17) forms an extension which projects radially from the pivoting-axis member (11).

5. Armrest according to one of claims 1 to 4,
**characterised in that**
the holding element (17) acts upon the bending bar (15) at half its length, i.e. centrally.

6. Armrest according to one of claims 1 to 5,
**characterised in that**
the holding element (17) acts upon the bending bar (15) only in a compression-proof manner by means of a holding face (18) of its holding clearance (19) in a manner corresponding to the direction of downward pivoting (u) of the armrest body (10).

7. Armrest according to one of claims 1 to 5,
**characterised in that**
the holding element (17) acts upon the bending bar (15) in a tension-proof and compression-proof manner with respect to both directions of pivoting (u, v) of the armrest body (10).

8. Armrest according to one of claims 1 to 7,
**characterised in that**
each end (22) of the bending bar is guided in a part-circular guide clearance (29) which is arranged coaxially in relation to the axis of pivoting (x) and of which one end region forms the supporting stop (30) for the end (22) of the bending bar with respect to the inoperative position of the armrest body (10), while its other end region constitutes a stop (31) for the end (22) of the bending bar with respect to the raised position of the armrest body (10).

9. Armrest according to claim 8,
**characterised in that**
each part-circular guide clearance (29) is arranged in a region of the holding bracket (28) which also forms a bearing clearance or bearing hole (32) for one bearing pin (20) of the pivoting-axis member (11) in each case.

10. Armrest according to one of claims 1 to 9,
**characterised in that**
the armrest body (10) has two longitudinal frame parts (13) which are arranged at a distance from one another and which are spaced apart and fastened to one another by means of the pivoting-axis member (11) which extends orthogonally in relation to said two longitudinal frame parts (13).

11. Armrest according to one of claims 1 to 10,
**characterised in that**
the axis of pivoting (x) is arranged between a free end (14) of the armrest body (10) and the bending bar (15).

12. Armrest according to claim 11,
**characterised in that**
the axis of pivoting (x) is more closely adjacent to the bending bar (15) than to the free end (14) of the armrest body (10).

13. Armrest according to one of the preceding claims,
**characterised in that**
the holding element (17) projects away from the pivoting-axis member (11) towards the bending bar (15).

14. Armrest according to one of the preceding claims,
**characterised in that**
each end (22) of the bending bar passes through a spring-compensating clearance (23) which is arranged on a region (24) of one longitudinal frame part (13) in each case that points away from the free end of the armrest body (10), and which clearance permits the end (22) of the bending bar a relative movement with respect to the longitudinal frame part (13).

15. Armrest according to claim 14,
**characterised in that**
each spring-compensating clearance (23) forms a delimiting stop (34) for the additional downward swing of the armrest body (10) that occurs when overloading (PE) takes place.

## Revendications

1. Accoudoir, tel qu'accoudoir central pour véhicules, avec un corps d'accoudoir (10), susceptible de pivoter, entre une position relevée et une position abaissée, autour d'un axe de pivotement (x) monté en palier du côté d'une structure de siège (28), corps d'accoudoir dans la position abaissé, la position de repos, dans laquelle le corps d'accoudoir (10) est soutenu, à l'encontre d'une force de rappel élastique, de manière correspondante à son sens de pivotement descendant (u), au moins indirectement sur au moins une butée d'appui (30), de manière que, dans le cas d'une surcharge se produisant dans la position de repos, un pivotement de descente supplémentaire soit permis au corps d'accoudoir (10), à l'encontre de la force de rappel élastique, **caractérisé en ce que** le corps d'accoudoir (10) guide, avec une possibilité de pivotement conjoint, au moyen d'un élément de maintien (17) lui étant cinématiquement unitaire, une barre de flexion (15) s'étendant parallèlement à l'axe de pivotement (x) du corps d'accoudoir (10), barre de flexion (22) dont les deux extrémités libres, dans la position de repos du corps d'accoudoir (10), prennent appui chacune contre une butée d'appui (30) formée du côté de la structure de siège (28), de manière correspondante à son sens de pivotement descendant (u).

2. Accoudoir selon la revendication 1, **caractérisé en ce que** la butée d'appui (30) est solidaire de la structure de siège.

3. Accoudoir selon la revendication 1 ou selon la revendication 2, **caractérisé en ce que** l'élément de maintien (17) est fixé à un corps d'axe de pivotement (11) formant l'axe de pivotement (x).

4. Accoudoir selon l'une des revendications 1 à 3, **caractérisé en ce que** l'élément de maintien (17) forme un prolongement faisant saillie radialement du corps d'axe de pivotement (11).

5. Accoudoir selon l'une des revendications 1 à 4, **caractérisé en ce que** l'élément de maintien (17) agit sur la barre de flexion (15) à mi-longueur, c'est-à-dire centralement.

6. Accoudoir selon l'une des revendications 1 à 5, **caractérisé en ce que** l'élément de maintien (17) agit sur la barre de flexion (15), de manière correspondante au sens de pivotement descendant (u) du corps d'accoudoir (10), avec une face de maintien (18) de son évidement de maintien (19), uniquement de manière rigide en compression.

7. Accoudoir selon l'une des revendications 1 à 5, **caractérisé en ce que** l'élément de maintien (17) agit sur la barre de flexion (15), de manière rigide en traction et en compression, relativement aux deux sens de pivotement descendant (u, v) du corps d'accoudoir (10).

8. Accoudoir selon l'une des revendications 1 à 7, **caractérisé en ce que** chaque extrémité (22) de la barre de flexion est guidée dans un évidement de guidage (29) en forme de cercle partiel, disposé coaxialement à l'axe de pivotement (x), évidement de guidage dont une zone d'extrémité forme la butée d'appui (30) pour l'extrémité (22) de la barre de flexion relativement à la position de repos du corps d'accoudoir (10), tandis que son autre zone d'extrémité constitue une butée (31) pour l'extrémité (22) de la barre de flexion relativement à la position relevée du corps d'accoudoir (10).

9. Accoudoir selon la revendication 8, **caractérisé en ce que** chaque évidement de guidage (29) en forme de cercle partiel est situé dans une zone de la console de maintien (28) qui forme également un évidement formant palier ou un trou formant palier (32) pour chaque fois un tourillon de palier (20) du corps d'axe de pivotement (11).

10. Accoudoir selon l'une des revendications 1 à 9, **caractérisé en ce que** le corps d'accoudoir (10) présente deux parties de cadre longitudinal (13), disposées à distance l'une de l'autre, espacées au moyen du corps d'axe de pivotement (11) s'étendant perpendiculairement aux deux parties de cadre longitudinal (13) et fixées l'une à l'autre.

11. Accoudoir selon l'une des revendications 1 à 10, **caractérisé en ce que** l'axe de pivotement (x) est disposé entre une extrémité (14) libre du corps d'accoudoir (10) et la barre de flexion (15).

12. Accoudoir selon la revendication 11, **caractérisé en ce que** l'axe de pivotement (x) est disposé de manière voisine plus intimement de la barre de flexion (15) que de l'extrémité (14) libre du corps d'accoudoir (10).

13. Accoudoir selon l'une des revendications précédentes, **caractérisé en ce que** l'élément de maintien (17) part du corps d'axe de pivotement (11) en s'écartant vers la barre de flexion (15).

14. Accoudoir selon l'une des revendications précédentes, **caractérisé en ce que** chaque extrémité (22) de la barre de flexion traverse un évidement d'équilibrage élastique (23), disposé sur une zone (24), allant en s'écartant de l'extrémité libre du corps d'accoudoir (10), de chaque partie de cadre longitudinal (13) et permettant à l'extrémité (22) de la barre de flexion d'effectuer un déplacement relatif par rapport à la partie de cadre longitudinal (13).

15. Accoudoir selon la revendication 14, **caractérisé en ce que** chaque évidement d'équilibrage élastique (23) forme une butée de délimitation (34) pour le pivotement de descente supplémentaire, se produisant en cas de surcharge (PE), du corps d'accoudoir (10).
